# FASCICULE DE BREVET EUROPEEN

(11) **EP 1 553 324 B1**
(45) Date de publication et mention de la délivrance du brevet: **31.10.2007**
(21) Numéro de dépôt: 05300018.8
(22) Date de dépôt: 11.01.2005
(51) Int. Cl.: F16F 15/06, F01D 25/16

(54) **Support de palier à double raideur**
Lagerträger mit doppelter Steifigkeit
Bearing support with double stiffness

(30) Priorité: 12.01.2004 FR 0400220
(43) Date de publication de la demande: 13.07.2005
(73) Titulaire: SNECMA, 75015 Paris (FR)
(72) Inventeur: Gerez, Valério, 91330, Yerres (FR); Jadczak, Edouard, 77350, La Mée sur Seine (FR)
(74) Mandataire: David, Daniel

(56) Documents cités:
- EP-A- 0 469 747
- EP-A- 0 814 236
- WO-A-98/54443
- DE-A- 1 575 635
- DE-A- 10 258 528
- US-A- 5 603 574
- US-B1- 6 325 546

## Description

L'invention concerne les supports de paliers d'arbres de moteurs rotatifs. Elle concerne en particulier les moteurs à turbine à gaz.

Actuellement, les paliers d'arbres de moteurs, qu'ils soient à roulements, à huile ou à gaz, et les structures ont une durée de vie fortement conditionnée par les caractéristiques vibratoires de l'ensemble du moteur : son bâti, l'arbre de transmission, les paliers et leurs supports.

Les principales sources d'excitation vibratoire viennent du balourd mécanique de l'arbre moteur, toujours présent à cause des imperfections de réalisation. Par suite les principales fréquences de vibration subies par l'ensemble moteur sont proches de la fréquence de rotation du moteur.

Plus la réponse vibratoire de chacune des parties de cet ensemble évoquées ci-dessus est importante, plus les paliers et les éléments de la structure sont sollicités, se fatiguent, et plus leur durée de vie s'en trouve abrégée.

De plus, ces vibrations induisent des nuisances sonores très importantes.

Un des moyens de réduire l'amplitude de ces vibrations consiste à prévoir des supports de palier agencés pour adapter la fréquence de résonance vis à vis de la fréquence de rotation. Par exemple, les supports de palier sont conçus pour que leur fréquence de résonance principale soit très éloignée de la fréquence de rotation correspondant au régime de fonctionnement du moteur.

Mais dans certains cas, un moteur peut être utilisé selon des régimes différents, par exemple selon deux régimes, à faible vitesse et à vitesse élevée.

On a alors pu proposer diverses solutions.

Par exemple US5433584 décrit un support pour deux paliers supportant un arbre en ses deux extrémités, le support étant agencé pour présenter une rigidité différente sur chacun des deux paliers, la combinaison des deux permettant de limiter les vibrations à régime normal de fonctionnement par l'un de ses paliers et d'encaisser un balourd anormal ou autre événement imprévu du même type par l'autre.

Cette solution n'est pas satisfaisante, l'un ou l'autre des deux paliers restant soumis, relativement au problème posé ci-dessus, à un niveau vibratoire anormal.

US5110257 et FR2439331 proposent une solution mettant en oeuvre un amortissement visqueux, le fluide étant commandé en fonction du régime moteur, pour modifier l'amortissement du support au cours de fonctionnement du moteur, donc d'adapter la réponse vibratoire de l'ensemble au régime de fonctionnement en cours, évitant l'inconvénient ci-dessus.

Cette solution est complexe car elle nécessite l'usage d'un fluide dont il faut gérer la présence par un appareillage hydraulique spécifique, et est de plus limitée à un amortissement visqueux.

WO 98/54443 A1 décrit un support de palier selon le préambule de la revendication 1. La demanderesse propose, conformément à l'invention un support de palier pour moteur rotatif, tel qu'un moteur à turbine à gaz, avec un arbre tournant supporté par au moins un palier et un bâti, pouvant fonctionner selon au moins deux régimes de fonctionnement différents et comportant au moins une structure mécanique portante de faible raideur et une structure portante de forte raideur combinées pour supporter le palier selon l'une ou l'autre de ces raideurs, caractérisé par le fait qu'il comprend des moyens d'actionnement commandés en fonction du régime agencés pour rendre la structure portante de faible raideur solidaire de la structure portante de forte raideur quand le moteur fonctionne selon un régime inférieur à une fréquence de rotation déterminée et désolidariser ladite structure portante de la structure portante de forte raideur quand le moteur fonctionne selon un régime supérieur à la fréquence de rotation.

L'utilisation de structures mécaniques évite la présence d'un quelconque appareillage hydraulique, les forces de raideur ainsi introduites pouvant s'opposer directement aux forces d'excitation engendrées par le balourd de l'arbre du moteur.

La structure portante de faible raideur supporte le palier et la structure portante de forte raideur supporte la structure portante de faible raideur quand le moteur fonctionne selon l'un des deux régimes, par exemple les basses vitesses de rotation du moteur, pour s'opposer au balourd de l'arbre.

Le support de palier est agencé pour désolidariser la structure portante de forte raideur de la structure portante de faible raideur quand le moteur fonctionne selon l'autre des deux régimes, par exemple des vitesses de rotation élevées du moteur, la structure de faible raideur filtrant l'excitation de vibration engendrée par le balourd de l'arbre.

Avantageusement, la structure portante de faible raideur est en forme de cage d'écureuil pour la rendre plus souple.

Conformément à une autre caractéristique, le support pour moteur pouvant fonctionner selon au moins trois régimes de fonctionnement différents, comporte au moins trois structures mécaniques portantes de raideurs différentes combinées pour supporter le palier selon l'une ou l'autre de ces raideurs.

L'invention porte aussi sur le système d'asservissement pour le pilotage des moyens d'actionnement d'une structure par rapport à l'autre commandant les dits moyens en fonction du régime de l'arbre ou du niveau vibratoire via les calculateurs de commande du moteur et/ou de l'avion sur lequel le moteur est monté.

L'invention sera mieux comprise à l'aide de la description suivante du support de palier selon une forme préférée de réalisation de l'invention et du dessin annexé dans lequel :
- la figure 1 représente un diagramme fréquentiel des réponses de la structure portante sous une excitation en vibration du rotor du moteur;
- les figures 2A et 2B représentent des vues en coupe longitudinale et en section du palier et de son support, selon l'invention, les structures portantes étant solidaires ; et
- les figures 3A et 3B représentent des vues en coupe longitudinale et en section du palier et de son support, selon l'invention, les structures portantes étant désolidarisées.

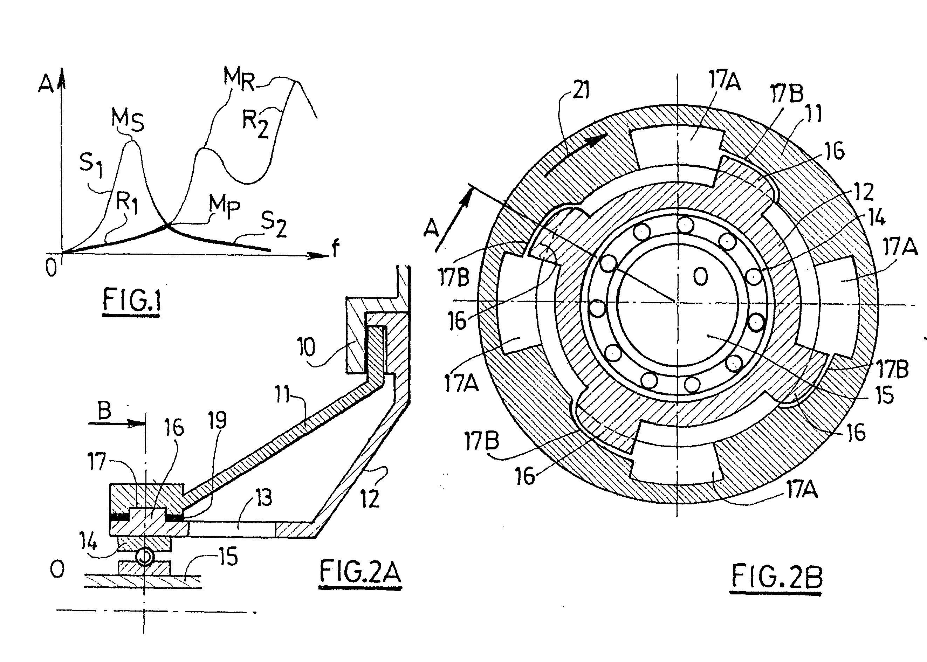

En référence aux figures 2A et 2B, l'une étant une coupe selon la lettre, A ou B, indiquée sur l'autre, le moteur rotatif comporte un bâti 10 et un arbre 15, tournant autour de l'axe O du moteur quand il fonctionne.

L'arbre est maintenu par un palier 14, ici à roulement à billes, et un support du palier 14 composé de deux structures portantes coaxiales, l'une externe 11 entourant l'autre interne 12. Elles sont toutes deux de forme principalement conique vers le bâti 10. La structure interne 12 du support est cylindrique à proximité du palier 14, de façon à ce que les deux structures se combinent aussi bien au niveau du bâti 10 que du palier 14, comme expliqué ci-après.

La structure portante interne 12 est solidaire du bâti 10 et du palier 14. Elle est fixe, de faible raideur ou souple.

Eventuellement, pour la rendre plus souple, elle peut être prévue en forme dite de cage d'écureuil 13.

La structure portante externe 11 est sensiblement plus raide que la structure interne et peut pour cela être nervurée sur sa surface interne. Les nervures ne sont pas représentées.

Les caractéristiques vibratoires de ces structures portantes sont schématisées sur le diagramme des spectres de leurs réponses fréquentielles de la figure 1. Elles résultent de leurs raideurs respectives et leur exploitation dans le dispositif décrit ici sera expliqué plus loin.

Cette dernière structure 11, en son extrémité proche du bâti 10, est montée coulissante en rotation sur ce dernier et sur la structure portante souple 12. Elle peut tourner autour de l'axe O, dans les deux sens de rotation, sous l'action d'une commande mécanique, soit manuelle, soit électrique, par des moyens appropriés classiques, non représentés, connus de l'homme du métier, par exemple un levier, un moteur électrique ou des vérins hydrauliques ou pneumatiques.

En son extrémité proche du palier 14, la structure portante 11 peut tourner autour de la structure portante 12 fixe selon un arc limité par des dents radiales 16, ici au nombre de quatre, solidaires de cette dernière structure 12. Les dents 16 coopèrent avec quatre logements 17 ménagés sur la face interne d'une bride de la structure 11 perpendiculaire à l'axe de rotation. Les logements présentent deux parties 17A, 17B dont les fonds sont à une distance différente de l'axe.

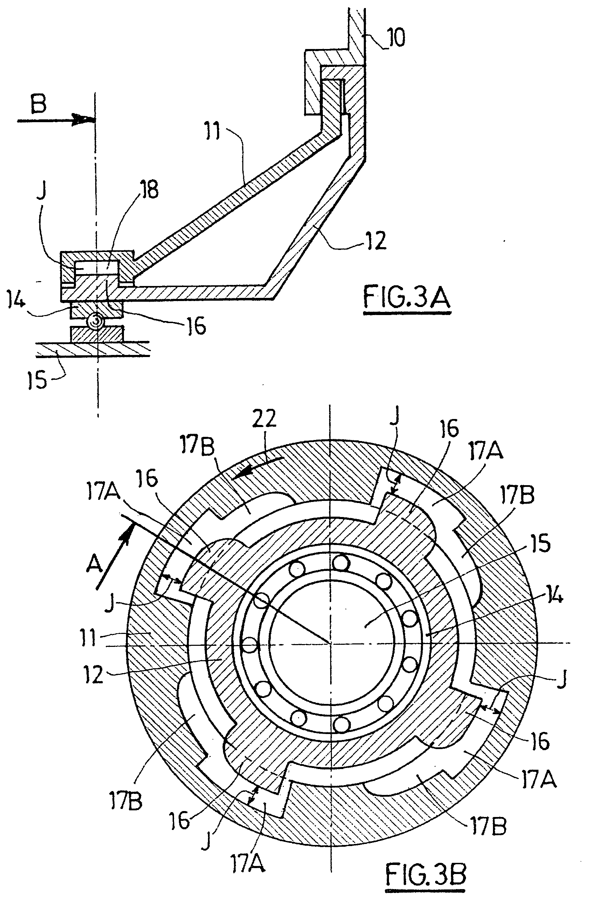

Dans la position illustrée par les figures 3A et 3B, les dents 16 sont disposés dans les parties 17A avec un jeu radial J entre leur sommet et le fond des logements. Ce jeu est supérieur aux effets du balourd de l'arbre en rotation.

Les parties 17B des logements sont de moindre diamètre. Les dents 16 peuvent toutes s'y insérer simultanément sans jeu radial, en en épousant ainsi exactement les formes.

Quand les dents 16 sont disposées dans les parties 17B, comme dans les figures 2A et 2B, les structures portantes 11 et 12 sont solidaires à proximité du palier. Au contraire, dans les figures 3A et 3B, ces structures sont, à cet endroit, désolidarisées.

Du fait de leurs différentes raideurs, les structures 11 et 12, en référence au diagramme de la figure 1, ont des caractéristiques vibratoires telles que leur réponse à une excitation vibratoire générée par la rotation de l'arbre à une fréquence f peut être représentée par les courbes S1, S2 pour la structure souple et R1, R2 pour la structure raide.

Les résonances Ms et MR montrées par ces deux courbes sont nettement séparées et les deux courbes se coupent en un point Mp, correspondant à une fréquence de rotation fp, caractérisé par une faible amplitude de réponse vibratoire pour les deux structures simultanément. En deçà de la fréquence fp, la structure raide 11 ne présente pas de réponse R1 notable. Au delà de cette fréquence, c'est la structure souple qui filtre les excitations de l'arbre 15 et ne fournit pas de réponse S2 importante, alors qu'à l'inverse les réponses S1 et R2 sont élevées.

Quand la structure portante externe 11 est commandée mécaniquement en rotation pour tourner dans un premier sens 22, sur la figure 3B, par la commande ci-dessus, il vient dans la position forte raideur représentée en figures 2A et 2B. Ainsi, la structure portante 12 de faible raideur supporte le palier 14, et la structure portante 11 de forte raideur supporte la structure portante de faible raideur.

Dans cette position, les structures portantes 11 et 12 sont complètement solidaires, et c'est la structure la plus raide qui confère à l'ensemble du support de palier ses caractéristiques de raideur donnant une réponse en fréquence R1, celles de la structure portante externe 11. Cette position est commandée quand le moteur fonctionne selon un régime bas pour que le support de palier s'oppose aux excitations en fréquence engendrées par le balourd de l'arbre en rotation.

Quand la structure portante externe 11 est commandée mécaniquement en rotation pour tourner dans un deuxième sens 21, sur la figure 2B, par la commande ci-dessus, il vient dans la position faible raideur représentée en figures 3A et 3B.

Dans cette position, les structures portantes 11 et 12 sont désolidarisées au niveau du palier, et c'est la structure la plus souple qui confère à l'ensemble du support de palier ses caractéristiques de raideur donnant une réponse en fréquence S2, celles de la structure portante interne 12. Cette position est commandée quand le moteur fonctionne selon un régime élevé, le support de palier filtrant ainsi l'excitation en vibration engendrée par le balourd de l'arbre en rotation.

Ainsi, pour adapter au mieux les caractéristiques vibratoires globales du support de palier, on commande mécaniquement la structure externe 11 en rotation dans le second sens 21 tant que le régime moteur est inférieur à la fréquence de rotation fp, et dans le premier sens 22 tant qu'il est supérieur à cette fréquence de rotation.

La réponse en fréquence globale de l'ensemble moteur est représentée par la courbe en fréquence composée des deux branches de courbe R1 et S2 dont le maximum commun est représenté par le point d'intersection Mp des courbes représentatives des réponses en fréquence des deux structures 11 et 12 composant le support de palier du moteur, ce maximum étant bien inférieur aux maximums Ms et MR des deux courbes représentatives des réponses en fréquence de ces deux structures.

## Revendications

1. Support (11, 12) de palier (14) pour moteur rotatif, tel qu'un moteur à turbine à gaz, avec un arbre (15) tournant supporté par au moins un palier (14) et un bâti (10), pouvant fonctionner selon au moins deux régimes de fonctionnement différents et comportant au moins une structure mécanique portante (12) de faible raideur et une structure mécanique portante (11) de forte raideur combinées pour supporter le palier (14) selon l'une ou l'autre de ces raideurs, **caractérisé par le fait qu'**il comprend des moyens d'actionnement commandés en fonction du régime agencés pour rendre la structure portante (12) de faible raideur solidaire de la structure portante (11) de forte raideur quand le moteur fonctionne selon un régime (f) inférieur à une fréquence de rotation (fp) déterminée et désolidariser ladite structure portante (12) de la structure portante (11) de forte raideur quand le moteur fonctionne selon un régime (f) supérieur à la fréquence de rotation (fp).

2. Support selon la revendication 1, **caractérisé par le fait que** la structure portante (12) de faible raideur comporte des dents radiales (16) et la structure portante (11) de forte raideur comporte des logements (17) coopérant avec les dents (16).

3. Support selon la revendication 2 dont les logements (17) comportent des parties (17B) coopérant avec les dents (16) pour solidariser les structures (11) et (12) entre elles.

4. Support selon la revendication 3 dont les logements (17) comportent des parties (17A) coopérant avec les dents (16) avec un jeu radial (J) pour désolidariser la structure portante (11) de forte raideur de la structure portante (12) de faible raideur, le jeu étant supérieur aux effets du balourd de l'arbre en rotation.

5. Support selon l'une des revendications 1 à 4, **caractérisé par le fait que** la structure portante (12) de faible raideur est en forme de cage d'écureuil (13).

6. Support selon l'une des revendications précédentes, pour moteur pouvant fonctionner selon au moins trois régimes de fonctionnement différents, comportant au moins trois structures mécaniques portantes de raideurs différentes combinées pour supporter le palier (14) selon l'une ou l'autre de ces raideurs.

7. Support de palier selon l'une des revendications précédentes avec un système d'asservissement pour le pilotage des moyens d'actionnement en fonction du régime de l'arbre ou du niveau vibratoire via les calculateurs de commande du moteur et/ou de l'avion sur lequel le moteur est monté.

8. Moteur à turbine à gaz comportant un support de palier selon l'une des revendications précédentes.

## Claims

1. Bearing (14) support (11, 12) for a rotating engine such as a gas turbine engine, with a rotating shaft (15) supported by at least one bearing (14) and a frame (10), capable of running at at least two different running speeds and comprising at least one mechanical supporting structure (12) with low stiffness and one mechanical supporting structure (11) with high stiffness combined so as to support the bearing (14) at one of these stiffnesses, **characterised by** the fact that it comprises actuating means controlled as a function of the speed for solidarising the supporting structure (12) with low stiffness to the supporting structure (11) with high stiffness when the engine is running at a speed (f) less than a determined rotation frequency (fp) and desolidarising said supportins structure (12) from the supporting structure (11) with high stiffness when the engine is running at a speed (f) higher than the rotation frequency (fp).

2. Support according to claim 1, **characterised by** the fact that the supporting structure (12) with low stiffness comprises radial teeth (16) and the supporting structure (11) with high stiffness comprises housings (17) cooperating with the teeth (16).

3. Support according to claim 2, for which the housings (17) comprise parts (17B) cooperating with the teeth (16) so as to solidarise the structures (11) and (12) to each other.

4. Support according to claim 3, for which the housings (17) comprise parts (17A) cooperating with the teeth (16) with a radial clearance (J) to desolidarise the supporting structure (11) with high stiffness from the supporting structure (12) with low stiffness, this clearance being greater than the unbalanced mass effects of the rotating shaft.

5. Support according to one of claims 1 to 4, **characterised by** the fact that the supporting structure (12) with low stiffness is in the form of a squirrel cage (13).

6. Support according to one of the above claims, for an engine running at least three different running speeds, comprising at least three supporting mechanical structures with different stiffnesses combined to support the bearing (14) at one of these stiffnesses.

7. Servocontrol system for controlling means of actuating one structure rather than another, in a bearing support according to one of the above claims, with the said means being controlled as a function of the shaft speed or vibrational amplitude through control computers on the engine and/or the aircraft on which the engine is installed.

8. Gas turbine engine comprising a bearing support according to one of the above claims.

## Patentansprüche

1. Lagerträger (11, 12) für ein Lager (14) in einem Rotationsmotor wie beispielsweise einem Gasturbinenmotor mit einer drehenden Welle (15), die von mindestens einem Lager (14) und einem Rahmen (10) gehalten wird, wobei er in mindestens zwei unterschiedlichen Betriebsdrehzahlen arbeiten kann und mindestens eine mechanische Tragstruktur (12) von geringer Steifigkeit und eine mechanische Tragstruktur (11) von hoher Steifigkeit aufweist, die miteinander kombiniert sind, um das Lager (14) gemäß der einen oder der anderen Steifigkeit zu stützen,
**dadurch gekennzeichnet,**
**dass** er in Abhängigkeit von der Drehzahl gesteuerte Betätigungsmittel umfasst, die so ausgeführt sind, dass die Tragstruktur (12) von geringer Steifigkeit fest mit der Tragstruktur (11) von hoher Steifigkeit verbunden ist, wenn der Motor mit einer Drehzahl (f) läuft, die geringer ist als eine bestimmte Drehfrequenz (fp), und diese Tragstruktur (12) von der Tragstruktur (11) von hoher Steifigkeit gelöst wird, wenn der Motor mit einer Drehzahl (f) läuft, die höher ist als die Drehfrequenz (fp).

2. Lagerträger nach Anspruch 1,
**dadurch gekennzeichnet,**
**dass** die Tragstruktur (12) von geringer Steifigkeit radiale Zähne (16) aufweist und die Tragstruktur (11) von hoher Steifigkeit Aufnahmen (17) aufweist, die mit den Zähnen (16) zusammenwirken.

3. Lagerträger nach Anspruch 2, bei dem die Aufnahmen (17) Abschnitte (17B) aufweisen, die mit den Zähnen (16) zusammenwirken, um die Tragstrukturen (11) und (12) fest miteinander zu verbinden.

4. Lagerträger nach Anspruch 3, bei dem die Aufnahmen (17) Abschnitte (17A) aufweisen, die mit den Zähnen (16) mit einem radialen Spiel (J) zusammenwirken, um die Tragstruktur (11) von hoher Steifigkeit von der Tragstruktur (12) von geringer Steifigkeit zu lösen, wobei das Spiel größer ist als die Wirkungen der Unwucht der sich drehenden Welle.

5. Lagerträger nach einem der Ansprüche 1 bis 4,
**dadurch gekennzeichnet,**
**dass** die Tragstruktur (12) von geringer Steifigkeit in der Form eines Käfigs (13) ausgebildet ist.

6. Lagerträger nach einem der vorherigen Ansprüche, für einen Motor, der in mindestens drei unterschiedlichen Betriebsdrehzahlen arbeiten kann und mindestens drei mechanische Tragstrukturen von unterschiedlichen Steifigkeiten aufweist, die miteinander kombiniert sind, um das Lager (14) gemäß der einen oder anderen dieser Steifigkeiten zu stützen.

7. Lagerträger nach einem der vorherigen Ansprüche mit einem Steuersystem zur Steuerung der Betätigungsmittel in Abhängigkeit von der Drehzahl der Welle oder vom Vibrationspegel über die Steuerungsrechner des Motors und/oder des Flugzeugs, an dem der Motor eingebaut ist.

8. Gasturbinenmotor, der einen Lagerträger nach einem der vorherigen Ansprüche aufweist.
